# FASCICULE DE BREVET EUROPEEN

(11) **EP 0 728 318 B1**
(45) Date de publication et mention de la délivrance du brevet: **17.12.1997**
(21) Numéro de dépôt: 95900177.7
(22) Date de dépôt: 31.10.1994
(51) Int. Cl.: G02B 6/134

(54) **FABRICATION D'UN GUIDE D'ONDES ENTERRE A PLUSIEURS PROFONDEURS D'ENTERREMENT**
HERSTELLUNG EINES VERGRABENEN WELLENLEITERS MIT VERSCHIEDENEN EINDRINGTIEFEN
MANUFACTURE OF A WAVEGUIDE EMBEDDED AT SEVERAL DEPTHS

(30) Priorité: 12.11.1993 FR 9313698
(43) Date de publication de la demande: 28.08.1996
(73) Titulaire: SCHNEIDER ELECTRIC SA, 92100 Boulogne Billancourt (FR)
(72) Inventeur: KEVORKIAN, Antoine, F-38000 Grenoble (FR); PERSEGOL, Dominique, F-38000 Grenoble (FR)
(74) Mandataire: Jouvray, Marie-Andrée
(86) Numéro de dépôt international: FR9401263
(87) Numéro de publication internationale: WO9513553

(56) Documents cités:
- EP-A- 0 380 138
- DE-A- 2 245 374
- US-A- 4 711 514
- PATENT ABSTRACTS OF JAPAN vol. 14, no. 333 (P-1078) 18 Juillet 1990 & JP,A,02 113 209 (NIPPON SHEET GLASS) 25 Avril 1990
- ELECTRONICS LETTERS, vol. 28, no. 14, 2 juillet 1992, pages 1340-1342, Stevenage, Herts, GB; P.C. NOUTSIOS et al.:"Novel Vertical Directional Coupler made by field-assisted ion-exchanged slab waveguides in glass"
- PATENT ABSTRACTS OF JAPAN vol. 7, no. 198 (P-220) 2 Septembre 1983 & JP,A,58 097 005 (NIPPON DENKI) 9 Juin 1983

## Description

L'invention concerne un procédé de fabrication d'un dispositif d'optique intégrée comportant un substrat de verre et au moins un guide d'ondes optiques, ledit guide d'ondes ayant au moins une première portion disposée dans le substrat à une première profondeur par rapport à une face du substrat, au moins une seconde portion disposée dans le substrat à une seconde profondeur, supérieure à la première, par rapport à ladite face et une portion de transition entre les première et seconde portions. Un tel dispositif et sa fabrication sont connus de DE-A-2 245 374 & FR-A-2 152 464.

Les techniques d'optique intégrée permettent de faire varier facilement la forme d'un guide d'ondes dans une dimension, à savoir dans un plan horizontal, c'est-à-dire dans un plan parallèle à une face du substrat. Pour certaines applications, il est souhaitable de former des guides d'ondes dont la forme varie également en profondeur.

Actuellement, deux types de technique permettent de former un guide d'ondes de profondeur variable. Selon une première technique, une partie prédéterminée de la surface du substrat est attaquée, par des méthodes physiques ou chimiques, pour faire affleurer le guide d'onde. Avec cette première technique la surface du substrat obtenue après traitement n'est pas plane, ce qui rend délicates d'éventuelles étapes de fabrication ultérieures. De plus, il est difficile de contrôler avec précision la profondeur d'ablation du substrat, ce qui limite la reproductibilité de fabrication. Des pertes ou des réflexions apparaissent aux zones de transition qui ne sont pas assez graduelles et peuvent présenter des problèmes de tenue thermique.

Selon une seconde technique, un champ électrique inhomogène est appliqué entre une première face, ou face avant, du substrat et une électrode disposée sur une partie d'une seconde face, ou face arrière, du substrat, opposée à la première. L'application d'un champ électrique provoque l'enterrement du guide d'ondes sous l'électrode partielle et la formation d'une zone de transition de profondeur variable dans le reste du substrat. La forme de la zone de transition est liée à la forme des lignes de champ. Cette technique n'est utilisable qu'en technologie faisant appel à des ions mobiles. De plus, la zone de transition est toujours longue, de l'ordre de plusieurs fois l'épaisseur du substrat. A titre d'exemple, pour un substrat de 3 mm d'épaisseur, la zone de transition est de l'ordre de 10 mm ou plus. Par ailleurs, l'alignement de l'électrode située sur la face arrière par rapport au guide situé sur la face avant demande une adaptation complexe des machines existantes.

L'invention a pour but un procédé ne présentant pas ces divers inconvénients. Ce but est atteint par un procédé de fabrication selon les revendications 1 ou 4.

Le procédé selon l'invention est notamment parfaitement adapté à une production de masse, possède une excellente compatibilité avec d'autres étapes de fabrication de plusieurs technologies d'optique intégrée et permet un contrôle optimal des dimensions de la zone de transition.

Selon un premier développement, le procédé comporte une étape préalable de formation d'un guide initial avant disposition dudit masque. L'étape préalable de formation du guide initial et l'étape d'enterrement du guide d'ondes sont alors réalisées, par exemple, en technologie d'échange d'ions, le masque étant réalisé en un matériau non perméable aux ions, et l'étape d'enterrement étant effectuée par application d'un champ électrique.

Selon un second développement, la formation du guide d'ondes s'effectue en une seule étape. en présence du masque, selon une technologie d'implantation ionique ou électronique, ledit masque étant réalisé en un matériau freinant les ions ou les électrons.

L'invention concerne également un dispositif fabriqué selon le procédé revendiqué.

Selon un mode particulier de réalisation, le guide d'ondes comporte deux secondes portions disposées à ladite seconde profondeur et deux portions de transition reliant la première portion, disposée en surface, à chacune desdites secondes portions, de manière à constituer un capteur comportant une zone d'interaction avec un milieu externe constituée par ladite première portion du guide d'ondes.

D'autres avantages et caractéristiques ressortiront plus clairement de l'exposé qui va suivre, de modes de réalisation particuliers de l'invention, donnés à titre d'exemples non limitatifs et représentés aux dessins annexés sur lesquels :

Les figures 1 à 3 représentent trois étapes successives d'un procédé par ablation selon l'art antérieur.

Les figures 4 et 5 représentent la disposition d'un masque sur une face d'un substrat comportant un guide d'ondes, conformément à un mode particulier de réalisation du procédé selon la présente invention, respectivement en vue de dessus et en vue de face.

La figure 6 illustre, en vue de face, le dispositif obtenu après retrait du masque des figures 4 et 5.

La figure 7 illustre, en vue de dessus, la disposition d'un masque pour former un capteur selon un mode de réalisation particulier.

La figure 8 représente, en vue de face, le capteur obtenu après retrait du masque selon la figure 7.

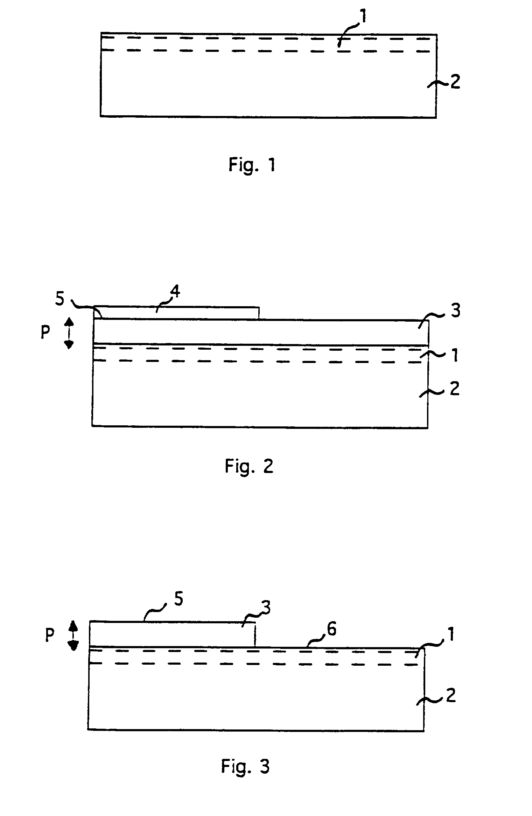

Les figures 1 à 3 illustrent un procédé utilisant une technique par ablation selon l'art antérieur. Dans une première étape (fig. 1) un guide d'ondes 1 est formé en surface dans un substrat de verre 2. Dans une seconde étape une couche additionnelle 3 de substrat est déposée, de façon uniforme, sur le substrat 2. Le guide d'ondes 1 est ainsi enterré à une profondeur P, sensiblement égale à l'épaisseur de la couche additionnelle 3, par rapport à la face supérieure 5 du substrat 2, 3. Dans une troisième étape (fig. 2), un masque 4 est déposé sur une partie de la face supérieure de la couche additionnelle 3, de manière à délimiter une portion du guide d'onde devant être enterrée et une portion ne devant pas être enterrée. La couche additionnelle 3 est ensuite attaquée, par des moyens chimiques ou physiques. dans sa partie non masquée. Puis le masque est retiré par tout moyen approprié et le dispositif obtenu est représenté à la figure 3. Le guide d'onde 1 comporte une portion enterrée à une profondeur P sous la partie restante de la couche additionnelle et une portion en surface dans le substrat 2 dans la zone non masquée où la couche additionnelle a été supprimée.

Ce procédé de fabrication est relativement long et complexe. Certains des inconvénients déjà mentionnés ci-dessus ressortent clairement des figures. Le dispositif obtenu comporte notamment une surface supérieure 5, 6 qui n'est pas plane, ce qui peut rendre délicates d'autres étapes de fabrication ultérieures. A titre d'exemple, si la portion du guide d'onde disposée en surface est disposée entre deux couches additionnelles pour servir de capteur, il peut être difficile de déposer une couche mince d'un matériau à étudier sur la surface 6 correspondante. De plus, il est difficile de contrôler très précisément la profondeur d'ablation de la couche additionnelle, ce qui limite la reproductibilité de fabrication.

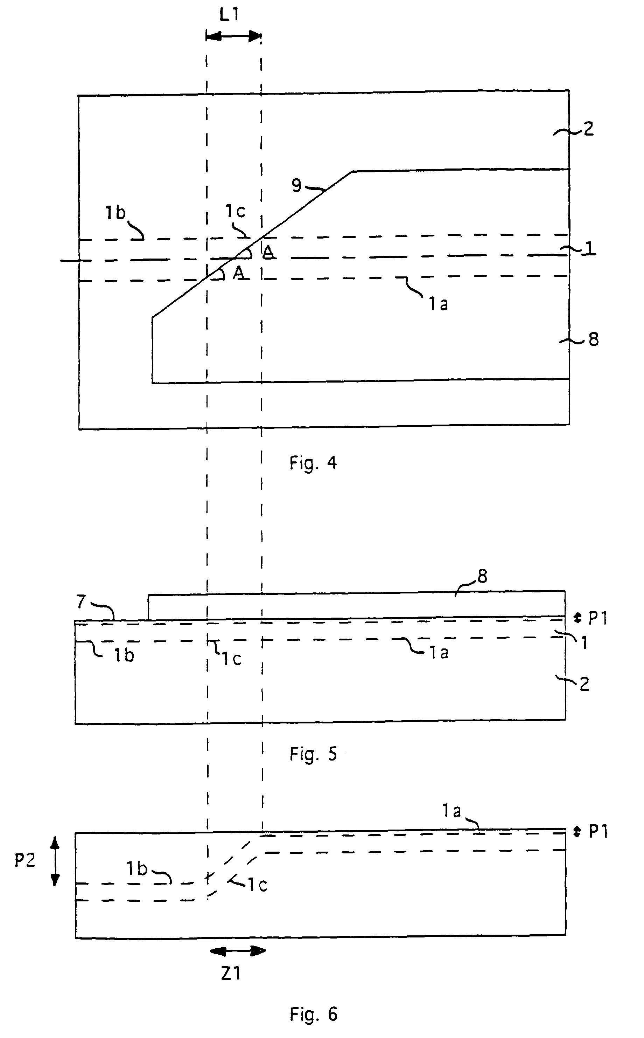

Dans le mode de réalisation particulier représenté aux figures 4 et 5, un guide d'ondes 1 a été préalablement formé dans un substrat 2, en surface, ou à une faible profondeur P1 par rapport à la face supérieure 7 du substrat. Sur la figure 4, le guide d'ondes 1 est un guide de largeur uniforme. L'invention est applicable quelle que soit la forme du guide d'ondes dans un plan horizontal, parallèlement à la face 7. De même, plusieurs guides d'ondes distincts peuvent être formés simultanément dans un même substrat.

Un masque 8 est disposé sur la face supérieure 7 du substrat 2. Le masque 8 recouvre complètement une portion masquée la du guide et il laisse une portion 1b complètement non masquée. Il comporte, de plus, un bord 9 coupant obliquement le guide d'ondes, sous un angle A prédéterminé, de manière à délimiter une portion axiale lc partiellement masquée du guide d'ondes. L'angle A, exagéré sur la figure pour des raisons de clarté, est très faible, de préférence de l'ordre de quelques degrés. La longueur axiale L1 de la portion lc partiellement masquée peut être définie de façon très précise : elle dépend de la largeur du guide d'ondes 1 dans cette portion de guide et de l'angle A.

A titre d'exemple non limitatif, pour un guide d'ondes monomode, de 5 à 10 micromètres de largeur dans la portion partiellement masquée, l'angle A est inférieur à 5° environ, et de préférence de l'ordre du degré. Il est ainsi possible de délimiter avec précision une portion lc partiellement masquée de l'ordre de 0,5 mm à 1 mm de long.

Le procédé comporte ensuite une étape d'enterrement local du guide d'ondes dans le substrat en présence du masque. La portion non masquée 1b est enterrée à une profondeur P2 prédéterminée, tandis que la portion masquée la reste sensiblement à sa profondeur initiale P1. La portion partiellement masquée lc constitue alors automatiquement une portion de transition, de profondeur variable, entre les portions 1a et 1b. La transition est une transition graduelle, de type adiabatique, de sorte que les pertes d'insertion sont très réduites. On obtient par exemple facilement des pertes d'insertion inférieures à 10 %. La longueur axiale 1 de la zone de transition du guide correspond à la longueur axiale Z1 de la portion partiellement masquée lc, définie de façon précise lors de la disposition du masque sur le substrat. Cette longueur est suffisamment grande, supérieure à 10 micromètres, typiquement de l'ordre de 0,5 mm, pour limiter les pertes d'insertion. Le masque 8 est ensuite retiré par tout procédé Approprié et le dispositif obtenu est représenté à la figure 6.

Le procédé décrit ci-dessus peut être réalisé en technologie d'échange d'ions, utilisant la migration d'ions sous champ électrique. L'étape préalable de formation du guide 1 dans le substrat peut être réalisée dans la même technologie, par un premier échange d'ions, éventuellement assisté par un champ électrique. Si le masque 8 est en matériau non perméable aux ions, par exemple en aluminium ou en matériau diélectrique, le guide initial peut être localement enterré par l'application d'un champ électrique. Le masque 8 est ensuite retiré, par exemple par dissolution chimique, pour que le dispositif présente de nouveau une surface supérieure plane et uniforme (figure 6).

Le procédé peut également être réalisé en technologie d'implantation ionique ou électronique. Le masque 8 est alors formé en un matériau freinant les ions ou les électrons incidents, par exemple en un métal compatible avec le matériau constituant le substrat 2, de manière à constituer un filtre. Le guide d'ondes 1 peut alors être formé en une seule étape, les ions ou les électrons pénétrant plus profondément dans le susbstrat dans la zone non masquée que dans la zone masquée. La zone partiellement masquée forme comme précédemment la zone de transition. Le masque est ensuite retiré par tout processus approprié.

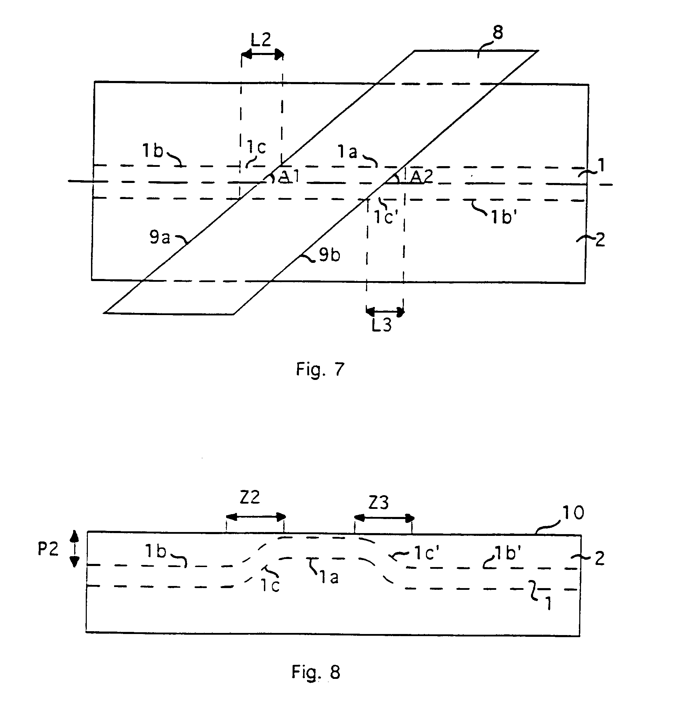

Les figures 7 et 8 illustrent l'utilisation du procédé selon l'invention pour la fabrication d'un capteur comportant un guide d'ondes 1 ayant une zone la en affleurement avec la surface 10 d'un substrat 2 de manière à créer une zone d'interaction du guide d'ondes avec un milieu externe. Aux deux extrémités du capteur, le guide d'ondes comporte deux portions, 1b et 1b', enterrées dans le substrat. L'enterrement du guide permet, notamment en raison de sa symétrie circulaire, un couplage plus facile avec d'autres éléments optiques, par exemple avec des fibres optiques. n permet également de conduire la lumière avec des pertes minimum.

Pour former le capteur selon la figure, 8, on utilise un masque 8 tel que représenté à la figure 7. Le masque 8 comporte un premier bord 9a, faisant un angle A1 avec l'axe du guide d'ondes pour définir une première zone de transition Z2. Il délimite comme précédemment une portion 1b non masquée, une portion lc partiellement masquée, de longueur L2 et une première extrémité d'une portion la masquée. Un second bord 9b du masque, faisant un angle A2 avec l'axe du guide d'ondes, définit une seconde zone de transition Z3, séparée de la première zone de transition Z2 par la portion la masquée. Le second bord 9b délimite la seconde extrémité de la portion la masquée, une seconde portion 1c' partiellement masquée et une seconde portion 1b' non masquée. Les angles A1 et A2 peuvent être égaux, comme représentés sur la figure, ou différents.

Il est ainsi possible de former simultanément plusieurs zones non enterrées et enterrées d'un guide d'ondes dans un substrat, un bord d'un masque délimitant une zone de transition graduelle, de profondeur variable, entre une zone enterrée et une zone non enterrée adjacente.

La configuration du dispositif représenté à la figure 8 peut être utilisée pour réaliser des capteurs physiques, chimiques ou biologiques, le milieu à étudier venant en contact avec la portion la du guide d'ondes. Elle peut également être utilisée pour la réalisation de polariseurs, un métal ou un milieu biréfringent étant alors disposé sur la zone d'interaction la. Plus généralement, elle est utilisable dans tout type de dispositif où l'on souhaite établir une intéraction entre un milieu extérieur et la lumière véhiculée dans le guide. Des dispositifs à effet non linéraire et des amplificateurs optiques peuvent également utiliser ce type de configuration.

A titre d'exemple non limitatif, un dispositif réalisé conformément au procédé selon l'invention peut comporter un substrat de verre de 1 à 5 mm d'épaisseur et de quelques centimètres de long. Le masque est formé par dépôt d'un matériau approprié d'environ 0,2 micromètres. La portion 1b non masquée du guide d'ondes est enterrée à environ 10 micromètres de la surface supérieure 10 du substrat et la longueur de la zone de transition est de l'ordre de 0,5 mm. De telles dimensions sont aisément reproductibles.

La longueur de la zone de transition peut être prédéterminée facilement à partir de la largeur du guide d'ondes dans la zone de transition et de l'angle entre le masque et le guide d'ondes. Ce procédé permet de réduire les pertes d'insertion en formant automatiquement une zone de transition adiabatique entre une zone enterrée et une zone non enterrée, ou moins enterrée, adjacente.

Le procédé est simple et peu coûteux, parfaitement adapté à une production de masse. Il est par ailleurs parfaitement compatible avec d'autres étapes de fabrication d'un dispositif conformément à plusieurs technologies d'optique intégrée.

## Revendications

1. Procédé de fabrication d'un dispositif d'optique intégrée, comportant un substrat de verre (2) et au moins un guide d'ondes optiques (1), ledit guide d'ondes (1) ayant au moins une première portion (1a) disposée dans le substrat à une première profondeur (P1) par rapport à une face (7, 10) du substrat, au moins une seconde portion (1b, 1b') disposée dans le substrat à une seconde profondeur (P2), supérieure à la première, par rapport à ladite face et une portion de transition (1c, 1c') entre les première et seconde portions, procédé comportant une étape préalable de formation d'un guide d'ondes initial (1) en surface ou à une faible profondeur (P1) par rapport à ladite face (7, 10) du substrat. procédé caractérisé en ce qu'il comporte la disposition d'un masque (8) sur ladite face (7, 10) du substrat (2), ledit masque (8) comportant au moins un bord (9, 9a, 9b) coupant obliquement le guide d'ondes sous un angle prédéterminé (A, A1, A2), de préférence très faible, de manière à délimiter au moins une portion axiale (1a) totalement masquée du guide d'ondes destinée à former la première portion, une portion axiale (1b, 1b') non masquée du guide d'ondes destinée à former la seconde portion et une portion axiale (1c, 1c') partiellement masquée du guide d'ondes pour former ladite portion de transition. le procédé comportant une étape d'enterrement du guide d'ondes (1) dans le substrat (2), en présence dudit masque (8), pour amener la seconde portion (1b, 1b') du guide d'ondes à ladite seconde profondeur (P2) et former la portion de transition, puis une étape de retrait du masque.

2. Procédé suivant la revendication 1, caractérisé en ce que l'étape préalable de formation du guide initial et l'étape d'enterrement du guide d'ondes sont réalisées en technologie d'échange d'ions, le masque (8) étant réalisé en un matériau non perméable aux ions, et l'étape d'enterrement étant effectuée par application d'un champ électrique.

3. Procédé selon la revendication 2, caractérisé en ce que le masque (8) est en aluminium ou en matériau diélectrique.

4. Procédé de fabrication d'un dispositif d'optique intégrée, comportant un substrat de verre (2) et au moins un guide d'ondes optiques (1), ledit guide d'ondes (1) ayant au moins une première portion (1a) disposée dans le substrat à une première prodondeur (P1) par rapport à une face (7, 10) du substrat, au moins une seconde portion (1b, 1b') disposée dans le substrat à une seconde profondeur (P2), supérieure à la première, par rapport à ladite face et une portion de transition (1c, 1c') entre les première et seconde portions, procédé caractérisé en ce qu'il comporte la disposition d'un masque (8) sur ladite face (7, 10) du substrat (2) ledit masque (8) comportant au moins un bord (9, 9a, 9b) coupant obliquement l'emplacement destiné au guide d'ondes à réaliser sous un angle prédéterminé (A, A1, A2), de préférence très faible, de manière à délimiter au moins une portion axiale (1a) totalement masquée dudit emplacement destinée à former la première portion du guide d'ondes, une portion axiale (1b, 1b') non masquée dudit emplacement destinée à former la seconde portion du guide d'ondes et une portion axiale (1c, 1c') partiellement masquée dudit emplacement pour former ladite portion de transition du guide d'ondes, le procédé comportant une étape unique de formation et d'enterrement partiel du guide d'ondes (1), en présence du masque (8), selon une technologie d'implantation ionique ou électronique, puis une étape de retrait du masque, ledit masque étant réalisé en un matériau freinant les ions ou les électrons.

5. Procédé suivant l'une quelconque des revendications 1 à 4, caractérisé en ce que ledit angle (A) est de l'ordre de quelques degrés.

6. Procédé selon l'une quelconque des revendications 1 à 5, caractérisé en ce que l'étape de retrait du masque comporte la dissolution chimique dudit masque.

7. Dispositif d'optique intégré comportant un substrat de verre (2) et au moins un guide d'ondes optiques (1), ledit guide d'ondes (1) ayant au moins une première portion (1a) disposée dans le substrat à une première profondeur (P1) par rapport à une face (7. 10) du substrat, au moins une seconde portion (1b, 1b') disposée dans le substrat à une seconde profondeur (P2), supérieure à la première, par rapport à ladite face et une portion de transition (1c, 1c') entre les première et seconde portions, dispositif caractérisé en ce qu'il est fabriqué par le procédé selon l'une quelconque des revendications précédentes et en ce que la dimension axiale (Z1, Z2, Z3) de la portion de transition (1c, 1c') du guide d'ondes est de l'ordre de 0.5 à 1 mm.

8. Dispositif selon la revendication 7 caractérisé en ce que le guide d'ondes comporte deux secondes portions (1b, 1b') disposées à ladite seconde profondeur (P2) et deux portions de transition (1c, 1c') reliant la première portion, (1a), disposée en surface, à chacune desdites secondes portions (1b, 1b'), de manière à constituer un capteur comportant une zone d'interaction avec un milieu externe constituée par ladite première portion (1a) du guide d'ondes.

## Claims

1. A manufacturing process of an integrated optic device, comprising a glass substrate (2) and at least one optic wave guide (1), said wave guide (1) having at least one first portion (1a) arranged in the substrate at a first depth (P1) with respect to a face (7, 10) of the substrate, at least one second portion (1b, 1b') arranged in the substrate at a second depth (P2), greater than the first, with respect to said face and a transition portion (1c, 1c') between the first and second portions, a process comprising a prior stage of formation of an initial wave guide (1) at the surface or at a small depth (P1) with respect to said face (7, 10) of the substrate, a process characterized in that it comprises placing of a mask (8) on said face (7, 10) of the substrate (2), said mask (8) comprising at least one edge (9, 9a, 9b) cutting the wave guide obliquely at a predetermined, preferably very small, angle (A, A1, A2) so as to define at least one totally masked axial portion (1a) of the wave guide designed to form the first portion, an unmasked axial portion (1b, 1b') of the wave guide designed to form the second portion and a partially masked axial portion (1c, 1c') of the wave guide to form said transition portion, the process comprising a burying stage of the wave guide (1) in the substrate (2), in the presence of said mask (8), to place the second portion (1b, 1b') of the wave guide at said second depth (P2) and form the transition portion, followed by a removal stage of the mask.

2. The process according to claim 1, characterized in that the prior stage of formation of the initial guide and the wave guide burying stage are performed by ion exchange technology, the mask (8) being made of a material not permeable to ions, and the burying stage being performed by application of an electrical field.

3. The process according to claim 2, characterized in that the mask (8) is made of aluminium or of a dielectric material.

4. A manufacturing process of an integrated optic device, comprising a glass substrate (2) and at least one optic wave guide (1), said wave guide (1) having at least one first portion (1a) arranged in the substrate at a first depth (P1) with respect to a face (7, 10) of the substrate, at least one second portion (1b, 1b') arranged in the substrate at a second depth (P2), greater than the first, with respect to said face and a transition portion (1c, 1c') between the first and second portions, a process characterized in that it comprises placing of a mask (8) on said face (7, 10) of the substrate (2), said mask (8) comprising at least one edge (9, 9a, 9b) cutting the wave guide obliquely at a predetermined, preferably very small, angle (A, A1, A2) so as to define at least one totally masked axial portion (1a) of said location designed to form the first portion of the wave guide, an unmasked axial portion (1b, 1b') of said location designed to form the second portion of the wave guide and a partially masked axial portion (1c, 1c') of said location to form said transition portion of the wave guide, the process comprising a single stage of formation and partial burying of the wave guide (1), in the presence of the mask (8), according to an ion or electron implantation technology, followed by a removal stage of the mask, said mask being made of a material slowing down the ions or electrons.

5. The process according to any one of the claims 1 to 4, characterized in that said angle (A) is about a few degrees.

6. The process according to any one of the claims 1 to 5, characterized in that the mask removal stage comprises chemical dissolution of said mask.

7. An integrated optic device comprising a glass substrate (2) and at least one optic wave guide (1), said wave guide (1) having at least one first portion (1a) arranged in the substrate at a first depth (P1) with respect to a face (7, 10) of the substrate, at least one second portion (1b, 1b') arranged in the substrate at a second depth (P2), greater than the first, with respect to said face and a transition portion (1c, 1c') between the first and second portions, a device characterized in that it is manufactured by the process according to any one of the foregoing claims and that the axial dimension (Z1, Z2, Z3) of the transition portion (1c, 1c') of the wave guide is about 0.5 to 1 mm.

8. The device according to claim 7, characterized in that the wave guide comprises two second portions (1b, 1b') located at said second depth (P2) and two transition portions (1c, 1c') joining the first portion (1a), located at the surface, to each of said second portions (1b, 1b'), so as to form a sensor comprising an interaction zone with an external medium constituted by said first portion (1a) of the wave guide.

## Patentansprüche

1. Verfahren zur Herstellung einer integriert-optischen Anordnung aus einem Glassubstrat (2) und mindestens einem optischen Wellenleiter (1), wobei der genannte Wellenleiter (1) mindestens einen im Substrat in einer, auf eine Seite (7, 10) des Substrats bezogenen ersten Tiefe (P1) angeordneten Abschnitt (1a), mindestens einen im Substrat in einer, auf die genannte Seite bezogenen zweiten Tiefe (P2), die größer ist als die erste Tiefe, angeordneten zweiten Abschnitt (1b, 1b') sowie einen Übergangsabschnitt (1c, 1c') zwischen dem ersten und dem zweiten Abschnitt aufweist und das Verfahren eine Vorstufe zur Herstellung eines Ausgangswellenleiters (1) an der Oberfläche oder in einer geringen Tiefe (P1) in bezug auf die genannte Seite (7, 10) des Substrats umfaßt, dadurch gekennzeichnet, daß das Verfahren das Anbringen einer Maske (8) auf der genannten Seite (7, 10) des Substrats (2) umfaßt, wobei die genannte Maske (8) mindestens einen, den Wellenleiter in einem bestimmten, vorzugsweise sehr kleinen Winkel (A, A1, A2) schneidenden Rand (9, 9a, 9b) aufweist, der mindestens einen, zur Bildung des ersten Abschnitts dienenden, vollständig maskierten Axialabschnitt (1a) des Wellenleiters, einen zur Bildung des zweiten Abschnitts dienenden, nicht maskierten Axialabschnitt (1b, 1b') des Wellenleiters und einen zur Bildung des genannten Übergangsabschnitts dienenden, teilweise maskierten Axialabschnitt (1c, 1c') definiert, und das Verfahren, um den zweiten Abschnitt (1b, 1b') des Wellenleiter in die zweite Tiefe (P2) zu bringen und den Übergangsabschnitt auszubilden, eine Stufe zum Vergraben des Wellenleiters (1) im Substrat (2) bei angebrachter genannter Maske (8) sowie eine anschließende Stufe zur Entfernung der Maske umfaßt.

2. Verfahren nach Anspruch 1, dadurch gekennzeichnet, daß die Vorstufe zur Herstellung des Ausgangsleiters sowie die Stufe zum Vergraben des Wellenleiters mit Hilfe der Ionenaustausch-Technologie realisiert werden, die Maske (8) aus einem ionenundurchlässigen Material besteht und die Vergrabungsstufe durch Anlegen eines elektrischen Felds durchgeführt wird.

3. Verfahren nach Anspruch 2, dadurch gekennzeichnet, daß die Maske (8) aus Aluminium oder einem Isolierstoffbesteht.

4. Verfahren zur Herstellung einer integriert-optischen Anordnung aus einem Glassubstrat (2) und mindestens einem optischen Wellenleiter (1), wobei der genannte Wellenleiter (1) mindestens einen im Substrat in einer, auf eine Seite (7, 10) des Substrats bezogenen ersten Tiefe (P1) angeordneten Abschnitt (1a), mindestens einen im Substrat in einer, auf die genannte Seite bezogenen zweiten Tiefe (P2), die größer ist als die erste Tiefe, angeordneten zweiten Abschnitt (1b, 1b') sowie einen Übergangsabschnitt (1c, 1c') zwischen dem ersten und dem zweiten Abschnitt aufweist, dadurch gekennzeichnet, daß das Verfahren das Anbringen einer Maske (8) auf der genannten Seite (7, 10) des Substrats (2) umfaßt, wobei die genannte Maske (8) mindestens einen, den zur Aufnahme des Wellenleiters dienenden Raum, in einem bestimmten, vorzugsweise sehr kleinen Winkel (A, A1, A2) schneidenden Rand (9, 9a, 9b) aufweist, der mindestens einen, zur Bildung des ersten Abschnitts des Wellenleiters dienenden, vollständig maskierten Axialabschnitt (1a) des genannten Raums, einen zur Bildung des zweiten Abschnitts des Wellenleiters dienenden, nicht maskierten Axialabschnitt (1b, 1b') des genannten Raums und einen zur Bildung des genannten Übergangsabschnitts dienenden, teilweise maskierten Axialabschnitt (1c, 1c') des genannten Raums definiert, und das Verfahren eine einzige Stufe zur Herstellung und zum teilweisen Vergraben des Wellenleiters bei angebrachter genannter Maske (8) unter Einsatz einer Ionen- oder Elektronen-Implantationstechnik sowie eine anschließende Stufe zur Entfernung der Maske umfaßt, wobei die genannte Maske aus einem, die Ionen bzw. Elektronen abbremsenden Material besteht.

5. Verfahren nach irgendeinem der Ansprüche 1 bis 4, dadurch gekennzeichnet, daß der genannte Winkel (A) eine Größenordnung von einigen Grad aufweist.

6. Verfahren nach irgendeinem der Ansprüche 1 bis 5, dadurch gekennzeichnet, daß die Stufe zur Entfernung der Maske die chemische Lösung der genannten Maske umfaßt.

7. Integriert-optische Anordnung aus einem Glassubstrat (2) und mindestens einem optischen Wellenleiter (1), wobei der genannte Wellenleiter (1) mindestens einen, im Substrat in einer, auf eine Seite (7, 10) des Substrats bezogenen ersten Tiefe (P1) angeordneten Abschnitt (1a), mindestens einen, im Substrat in einer, auf die genannte Seite bezogenen zweiten Tiefe (P2), die größer ist als die erste Tiefe, angeordneten zweiten Abschnitt (1b, 1b') sowie einen Übergangsabschnitt (1c, 1c') zwischen dem ersten und dem zweiten Abschnitt aufweist, dadurch gekennzeichnet, daß sie nach dem, in irgendeinem der vorhergehenden Ansprüche beschrieben Verfahren hergestellt wird und daß die axiale Ausdehnung (Z1, Z2, Z3) des Übergangsabschnitts (1c, 1c') des Wellenleiters etwa 0,5 bis 1 mm beträgt.

8. Anordnung nach Anspruch 7, dadurch gekennzeichnet, daß der Wellenleiter zwei, in der genannten zweiten Tiefe (P2) angeordnete zweite Abschnitte (1b, 1b') sowie zwei Übergangsabschnitte (1c, 1c') umfaßt, die den an der Oberfläche angeordneten ersten Abschnitt (1a) mit jedem der genannten zweiten Abschnitte (1b, 1b') verbinden, derart daß ein Sensor gebildet wird, der einen durch den ersten Abschnitt (1a) des Wellenleiters gebildeten Bereich zur Kontaktierung eines äußeren Mediums aufweist.
